(19) Europäisches Patentamt
European Patent Office
Office européen des brevets

(11) **EP 3 078 437 B1**

(12) **EUROPÄISCHE PATENTSCHRIFT**

(45) Veröffentlichungstag und Bekanntmachung des Hinweises auf die Patenterteilung:
**05.01.2022   Patentblatt 2022/01**

(51) Int Cl.:
**B22F 9/04** *(2006.01)*          **C04B 38/02** *(2006.01)*
**C23C 4/04** *(2006.01)*

(21) Anmeldenummer: **15163031.6**

(22) Anmeldetag: **09.04.2015**

(54) **VERFAHREN ZUR HERSTELLUNG VON PLASTISCH VERFORMTEN METALLPARTIKELN**

METHOD FOR THE PREPARATION OF PLASTICALLY REFORMED METAL PARTICLES

PROCÉDÉ DE PRODUCTION DE PARTICULES MÉTALLIQUES DÉFORMÉES PLASTIQUEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**12.10.2016   Patentblatt 2016/41**

(73) Patentinhaber: **Eckart GmbH**
**91235 Hartenstein (DE)**

(72) Erfinder:
• **Terra, Frank**
**90480 Nürnberg (DE)**
• **Engelhardt, Richard**
**91282 Betzenstein (DE)**

(74) Vertreter: **Henglein, Frank Arwed**
**Altana Management Services GmbH**
**Location Hartenstein**
**Güntersthal 4**
**91235 Hartenstein (DE)**

(56) Entgegenhaltungen:
**EP-A2- 0 086 575          EP-A2- 0 441 607**
**EP-A2- 1 029 895          EP-A2- 1 556 182**
**WO-A2-2013/014211     CN-A- 102 343 438**
**JP-A- 2007 224 363       RU-C1- 2 363 562**
**US-A- 4 419 134           US-B2- 6 582 676**

**Beschreibung**

Die vorliegende Erfindung betrifft ein Verfahren zur Herstellung plastisch verformter Metallpartikel. Ferner betrifft die vorliegende Erfindung plastisch verformte Metallpartikel mit einer spezifischen oberflächlichen Beschichtung und Metallpartikelzusammensetzungen enthaltend plastisch verformte Metallpartikel erhalten mittels einer spezifischen Vermahlung. Zudem betrifft die vorliegende Erfindung die Verwendung der vorgenannten Metallpartikel und Metallpartikelzusammensetzungen bei der Herstellung von Porenbeton.

Ein Verwendungszweck von Aluminiumpartikeln ist die Herstellung von Porenbeton, wie dies in der US 8409345 B1 beschrieben wird. Die großtechnische Herstellung von Porenbeton stellt jedoch große Herausforderungen an die hierbei eingesetzten Ausgangsstoffe und Hilfsmittel. Einerseits müssen die Kosten niedrig gehalten werden, um ein preisgünstiges Produkt bereitstellen zu können. Andererseits muss ein stabiler Prozess gewährleistet sein, da allein die Entsorgung von Fehlchargen einen hohen Aufwand und Zusatzkosten mit sich bringt.

Trotz des Alters dieses Verfahrens sind spezifische Probleme daher noch immer Gegenstand von Weiterentwicklungen. Beispielsweise in der JP 2011256094 A soll das Problem der Rissbildung bei Porenbetonteilen größerer Dicke gelöst oder zumindest verringert werden.

Eine andere und bereits am Markt etablierte Weiterentwicklung sind plastisch verformte Aluminiumpartikel. Diese Partikel, wie sie von der Firma Eckart vertrieben werden, ermöglichen bei der Porenbetonherstellung ein gleichmäßigeres und vollständigeres Abreagieren des aktiven Metalls.

Auch andere technische Einsatzgebiete sind noch immer Gegenstand weiterer Forschungen. So behandelt die WO 2013/014211 A2 die Bereitstellung eines verbesserten Metallpartikelmaterials für Beschichtungsverfahrens wie dem Flammspritzen oder nichtthermischen Plasmaspritzen.

Jedoch auch in anderen Bereichen, in denen beispielsweise der optische Effekt der Aluminiumpigmente von Bedeutung ist, ist es noch immer die Aufgabe Produkte mit weiter verbesserten Eigenschaften bereitzustellen. So wird beispielsweise in der WO 2009/156149 A1 die Bereitstellung einer optimierten Metalleffektpigmentzusammensetzung beschrieben, welche optische Eigenschaften vergleichbar mit denen von PVD-Pigmenten bieten sollen. Gleichzeitig ist es jedoch die Aufgabe die Lösungsmittelmenge zu verringern und eine konstantere Verarbeitungsqualität zu gewährleisten.

Die EP 0 086 575 A2 offenbart ein zahnmedizinisches Verbindungsmaterial welches aus Aluminiumpulver und einem inerten organischem Träger hergestellt ist.

Die US 6,582,676 B2 offenbart ein Verfahren zur Herstellung von Wasserstoff, bei der ein Metall aus der Gruppe Aluminium, Magnesium Silicium, oder Zink als Reduktionsmittel für eine entsprechende Reaktion mit Wasser verwendet wird.

Die plastische Verformung von Metallpartikeln und deren Einsatz in verschiedensten Gebieten wie zur Fertigung von Porenbeton oder in wässrigen Lacksystemen sind somit bereits bekannt. Es besteht jedoch noch immer der Bedarf an Metallpartikeln, welche eine verbesserte Wasserbenetzbarkeit aufweisen und mittels eines vereinfachten Verfahrens hergestellt werden können.

Überraschenderweise zeigte sich, dass die Möglichkeit besteht bereits in einem einstufigen Prozess direkt Metallpartikelzusammensetzungen mit hervorragender Einarbeitbarkeit in wässrige Systeme bereitzustellen. Dies wird erreicht durch ein Verfahren gemäß Anspruch 1.

Die mittlere Molmasse des mindestens einem Polyalkylenglykols beträgt vorzugsweise mindestens 1300, mehr bevorzugt mindestens 1400, noch mehr bevorzugt mindestens 2900.

Unter Standardbedingungen werden die seitens IUPAC festgelegten Bedingungen verstanden (25 °C, 1 bar). Der Begriff "fest" bezeichnet den Aggregatzustand, dass heißt dass sich der betreffende Stoff im Gegensatz zu einem Gas oder einer Flüssigkeit nicht beliebig verformt, sondern formstabil ist. Beispielsweise kann ein Gefäß wie ein 100 ml Becherglas (5 cm Außendurchmesser) mit einem entsprechenden Stoff gefüllt werden ohne dass sich unter Standardbedingungen beispielsweise innerhalb der nächsten Stunde der Stoff der Form des Gefäßes anpasst und lückenlos füllt. Die plastische Verformung der Metallpartikel wird vorteilhafterweise mittels bekannter Vermahlungsverfahren durchgeführt. Beispiele hierfür eingesetzter Vorrichtungen sind Kugelmühlen und Rührwerkskugelmühlen. Derartige Vermahlungsschritte können auch eine Zerkleinerung der Partikel bewirken, so dass Bruchstücke der Ausgangspartikel entstehen. Das erfindungsgemäße Verfahren ist jedoch begleitet von einer plastischen Verformung der Partikel zumindest in einer Raumrichtung, so dass die erfindungsgemäß erhaltenen Metallpartikel mindestens eine Raumachse aufweisen, die um mindestens den Faktor 5 kleiner ist als die längste hierzu senkrecht stehende Raumachse. Vorzugsweise weist der erfindungsgemäß plastisch verformte Metallpartikel mindestens eine Raumachse auf, die um mindestens den Faktor 5 kleiner ist als zwei hierzu und zueinander senkrecht stehende Raumachsen. Unter den Begriffen "Ethylenglykoleinheit" und "Propylenglykoleinheit" werden die dem Fachmann im Rahmen der Polyalkylenglykole geläufigen Strukturen ( $(-CH_2-CH_2-O-)$ und $(-C(H)(CH_3)-CH_2-O-)$ ) verstanden. Die voranstehenden Strukturen oder nachfolgenden Aufführungen dieser Struktureinheiten implizieren jedoch keine Orientierung der Einheiten (zum Beispiel $(-C(H)(CH_3)-CH_2-O-)$, $(-O-C(H)(CH_3)-CH_2-)$, $(-CH_2-C(H)(CH_3)-O-)$, $(-O-CH_2-C(H)(CH_3)-)$ ), sofern dies nicht explizit angegeben ist. Soweit es nicht explizit abweichend spezifiziert ist bezeichnet der Begriff "mittlere Molmasse" eines Polymers in der vorliegenden Erfindung das Massenmittel der Molmasse. Die Bestimmung dieses Massenmittels der Molmasse kann mittels dem Fachmann geläufiger Verfahren oder Kombinationen derartiger Verfahren bestimmt werden. Beispielsweise hat sich die Anwendung von Verfahren unter Verwendung von Lichtstreuung als sehr vorteilhaft erwiesen wie der Mehrwinkellichtstreuung. Entsprechende Messgeräte sind beispielsweise von der Firma Wyatt Technology Corporation, USA, erhältlich. Dieses kann beispielsweise mit anderen Verfahren wie der GPC (Gel-Permeations-Chromatographie) verbunden werden, insbesondere sofern eine Mischung verschiedener Polymere vorliegt. Entsprechende Geräte werden beispielsweise von der Firma Malvern Instruments Ltd, England, unter dem Namen Omnisec vertrieben.

Bevorzugte Weiterbildungen des erfindungsgemäßen Verfahrens finden sich in den Ansprüchen 2 bis 8.

Ferner betrifft die vorliegende Erfindung Metallpartikel gemäß Anspruch 9. Bevorzugte Weiterbildungen der erfindungsgemäßen Metallpartikel finden sich in in dem Anspruch 10.

Ferner betrifft die vorliegende Erfindung Metallpartikelzusammensetzungen gemäß Anspruch 11.

Ferner betrifft die vorliegende Erfindung eine Verwendung gemäß Anspruch 12.

Überaschenderweise hat sich gezeigt, dass mittels des erfindungsgemäßen Verfahrens direkt in einem einstufigen Prozess plastisch verformte Metallpartikel mit hervorragender Wasserbenetzbarkeit erhalten werden. Eine derartige verbesserte Wasserbenetzbarkeit resultiert in einer verbesserten Dispergierbarkeit in Wasser und ist beispielsweise in Anwendungen wie dem Porenbeton wichtig. Insbesondere für ein Arbeitsgebiet wie dem Porenbeton ist es von großer Bedeutung mit möglichst wenigen Schritten möglichst gut in den wässrigen Porenbeton einarbeitbare Partikel zu erhalten.

Der Begriff "Aspektverhältnis" bezeichnet im Sinne der vorliegenden Erfindung das Verhältnis von mittlerem Partikeldurchmesser ($d_{50}$) zu mittlerer Partikeldicke ($h_{50}$). Der Begriff "$d_{50}$" oder auch "$d_{50}$-Wert" bezeichnet den Wert bei dem 50 % der Partikel in der Summenhäufigkeitsverteilung einen Durchmesser aufweisen, der gleich oder kleiner diesem Wert ist. Die Messungen werden vorzugsweise mit dem Partikelgrößenanalysator HELOS der Fa. Sympatec GmbH, Clausthal-Zellerfeld, Deutschland, durchgeführt. Die Dispergierung eines trockenen Pulvers kann hierbei mit einer Dispergiereinheit vom Typ Rodos T4.1 bei einem Primärdruck von beispielsweise 4 bar erfolgen. Alternativ kann die Größenverteilungskurve der Partikel beispielsweise mit einem Gerät der Fa. Quantachrome (Gerät: Cilas 1064) gemäß Herstellerangaben vermessen werden. Hierzu werden 1,5 g des pulverförmigen Beschichtungsmaterials in ca. 100 ml Ethanol dispergiert, 300 Sekunden im Ultraschallbad (Gerät: Sonorex IK 52, Fa. Bandelin) behandelt und anschließend mittels einer Pasteurpipette in die Probenvorbereitungszelle des Messgerätes gegeben und mehrmals vermessen. Aus den einzelnen Messergebnissen werden die resultierenden Mittelwerte gebildet. Die Auswertung der Streulichtsignale erfolgt dabei nach der Fraunhofer Methode.

Der Begriff "Legierung" im Sinne der vorliegenden Erfindung bedeutet, dass das entsprechende spezifizierte Metall mindestens 50 Gew.-%, mehr bevorzugt mindestens 70 Gew.-%, noch mehr bevorzugt mindestens 80 Gew.-%, der Legierung ausmacht, jeweils bezogen auf das Gesamtgewicht der Legierung.

Die Dicke der Partikel kann beispielsweise mittels REM wie folgt ermittelt werden. Die erfindungsgemäßen plättchenförmigen Partikel werden zunächst mit Aceton gewaschen und dann ausgetrocknet. Ein in der Elektronenmikroskopie übliches Harz, beispielsweise TEMPFIX (Gerhard Neubauer Chemikalien, D-48031 Münster, Deutschland), wird auf einen Probenteller aufgebracht und auf einer Heizplatte bis zum Erweichen erhitzt. Nachfolgend wird der Probenteller von der Heizplatte genommen und die Partikel werden auf das erweichte Harz gestreut. Das Harz wird durch die Abkühlung wieder fest und die aufgestreuten Partikel können - bedingt durch das Wechselspiel zwischen Adhäsion und Schwerkraft - nahezu senkrecht stehend und fixiert auf dem Probenteller präpariert werden. Dadurch sind die Partikel im Elektronenmikroskop seitlich gut zu vermessen. Bei der Vermessung der Dicke wird der azimuthale Winkel $\alpha$ des Partikels zu einer zur Oberfläche normalen Ebene geschätzt und bei der Dickenauswertung nach der Formel

$$h_{eff} = h_{mess}/\cos\alpha$$

berücksichtigt. Von den $h_{eff}$-Werten wird anhand der relativen Häufigkeiten die Summenverteilungskurve erstellt. Es werden ca. 100 Partikel, vorzugsweise 100 Partikel, gezählt.

Naturgemäß muss verstanden werden, dass die Gesamtsumme der Gew.-% aller Bestandteile beispielsweise der Metallpartikelzusammensetzung, der Metallpartikel, der Polyalkylenglykole oder Ähnlichem immer insgesamt 100 Gew.-% ergeben müssen. Notwendigerweise kann die Summe der einzelnen Bestandteile niemals 100 Gew.-% überschreiten, bezogen auf deren Gesamtgewicht, noch kann die Summe der Einzelgewichte aller Bestandteile unter 100 Gew.-% liegen. Ferner können naturgemäß Bestandteile welche keine notwendigerweise abschließende Liste aller Bestandteile darstellen insgesamt weniger als 100 Gew.-% darstellen.

Sofern die vorgenannte Verfahrensvariante nicht einsetzbar ist, können die Dicken der Partikel beispielsweise auch anhand von Querschliffen von lackierten Proben gezählt werden. Diese Methode sollte jedoch nur bei einer sehr guten planparallelen Orientierung der Partikel angewandt werden. Andernfalls können die Partikel im Querschliff mit einem azimuthalen Neigungswinkel, der jedoch für den Beobachter nicht erkennbar ist, orientiert sein. Dies führt systematisch zu der Messung von höheren Dicken.

Soweit nicht anderweitig spezifiziert, ist es in der vorliegenden Erfindung besonders bevorzugt, dass "im Wesentlichen" mindestens 95 %, vorzugsweise mindestens 99 %, bedeutet. Soweit es sich auf ein stoffliches Merkmal bezieht, wie beispielsweise die Menge eines stofflichen Bestandteils, so sind hiermit Gew.-% gemeint.

Der Begriff "Polymere" umfasst erfindungsgemäß auch Oligomere. Vorzugsweise weisen die erfindungsgemäßen Polymere wie beispielsweise Cellulosederivate, Polysaccharide, Polyvinyle, Polyacrylate und Polyethylenglykole mindestens 10 Monomereinheiten, mehr bevorzugt mindestens 20 Monomereinheiten, noch mehr bevorzugt mindestens 60 Monomereinheiten auf.

Unter dem Begriff "Pulver" wird im Sinne der vorliegenden Erfindung eine kleinteilige, feste Form eines Stoffes verstanden. Vorzugsweise beträgt die mittlere Teilchengröße ($d_{50}$) der erfindungsgemäßen Pulver höchstens 150 $\mu$m, mehr bevorzugt höchstens 123 $\mu$m, noch mehr bevorzugt höchstens 110 $\mu$m. Die Bestimmung dieser Größe des Pulvers erfolgt vorzugsweise mittels einem Gerät der Fa. Quantachrome (Gerät: Cilas 1064) gemäß Herstellerangaben. Hierzu werden 1,5 g des pulverförmigen Beschichtungsmaterials in ca. 100 ml Ethanol dispergiert und anschließend mittels einer Pasteurpipette in die Probenvorbereitungszelle des Messgerätes gegeben und mehrmals vermessen. Insbesondere erfolgt hierbei keine Dispergierung in einem Ultraschallbad und keine Zugabe von Dispergieradditiven. Aus den einzelnen Messergebnissen werden die resultierenden Mittelwerte gebildet. Die Auswertung der Streulichtsignale erfolgt dabei nach der Fraunhofer Methode. Hierbei wird eine Referenzgröße für typische Anwendungen wie den Porenbeton erhalten, die einen Rückschluss auf die Partikel oder Agglomeratgröße der Metallpartikel in dem Porenbeton ermöglicht. Insbesondere hat es sich als vorteilhaft erwiesen, wenn auch die erfindungsgemäßen Pasten unter den vorgenannten Messbedingungen die voranstehenden Obergrenzen der mittleren Teilchengröße aufweisen.

Die Erfindung betrifft ein Verfahren zur Herstellung plastisch verformter Metallpartikel, wobei Metallpartikel unter Einsatz mindestens eines Polyalkylenglykols vermahlen werden,

die Alkylenglykoleinheiten des mindestens einen Polyalkylenglykols ausgewählt werden aus Ethylenglykol und Propylenglykol,
mindestens 50 mol-% der Alkylenglykoleinheiten Ethylenglykoleinheiten sind,
die mittlere Molmasse des mindestens einen Polyalkylenglykols mindestens 1000, vorzugsweise mindestens 1300, mehr bevorzugt mindestens 1400, noch mehr bevorzugt mindestens 2900, beträgt und das mindestens eine Polyalkylenglykol unter Standardbedingungen fest ist. Hiermit wurden mittels eines sehr einfachen Verfahrens Metallpartikel erhalten, welche beispielsweise für Einsatzgebiete wie den Porenbeton sehr geeignet waren. Neben verfahrenstechnischen Vorteilen wurden auch Vorteile beim erhaltenen Produkt beobachtet. Insbesondere wiesen die hiermit erhaltenen Metallpartikel eine hervorragende Dispergierbarkeit in wässrigen Systemen auf. Dies ist besonders vorteilhaft bei Anwendungen wie dem Porenbeton, bei denen möglichst einfach und zuverlässig eine gleichmäßige Verteilung der Metallpartikel, insbesondere Aluminiumpartikel, in der Porenbetonmasse erfolgen soll. Da lokale Aufkonzentrierungen der Metallpartikel beispielsweise im Porenbeton zu Schwachstellen führt, ist eine gute Dispergierung essentiell. Somit ermöglichen die erfindungsgemäßen Metallpartikel in diesem Anwendungsfeld beispielsweise eine Beschleunigung der Produktion, eine erhöhte Konstanz der Produktqualität, eine Vereinfachung des apparativen und arbeitsbezogenen Aufwands, etc.. Jedoch auch weniger preisgetriebene Anwendungsfelder profitieren beispielsweise von der verbesserten Dispergierbarkeit. So scheinen hydrophile Beschichtungsmittel in nachfolgenden Prozessierungsschritten besser aufzuziehen, so dass beispielsweise bestimmte bekannte Beschichtungen einfacher oder neuartige Beschichtungen überhaupt erst aufgebracht werden können oder eine bessere Zwischenhaftung in bestimmten Beschichtungen erzielt wird.

Überraschenderweise wurde mittels simpler Standardverfahren zur Vermahlung mit den erfindungsgemäßen festen Polyalkylenglykolen eine gleichmäßge Verteilung auf die Metallpartikel erreicht. Bereits geringe Anteile ungleichmäßige Aufbringung hätten angesichts der großen Anzahl an Partikeln zu einer partiellen Entmischung führen sollen, welche jedoch nicht beobachtet wurde. Zudem wurde erwartet, dass zumindest die zunehmende Härte hochmolekularer Polyalkylenglykole die plastische Verformung beispielsweise in einer Kugelmühle erschweren oder eventuell eine ungleichmäßige Verteilung der Polyalkylenglykols beobachtet werden würde. Jedoch deuten orientierende Versuche darauf hin, dass eventuell vorhandene Verschlechterungen bei der Vermahlung minimal sind. Ferner scheinen entsprechende Partikel ein nochmals verbessertes Absetzverhalten aufzuweisen. Ohne dass es als Einschränkung der Erfindung verstanden werden darf wird vermutet, dass dies auf die Ausbildung einer Gelschicht um die Partikel infolge der stärkeren Viskositätserhöhung zurückzuführen ist.

Zwar kann das erfindungsgemäße Verfahren für ein breites Spektrum an Metallpartikeln eingesetzt werden, jedoch hat es sich als besonders vorteilhaft erwiesen für die Bereitstellung sehr preisgünstiger Metallpartikel, wie sie beispielsweise bei der Herstellung von Porenbeton erforderlich sind. Auch einfache Beschichtungen sind hierbei überraschenderweise nicht zur Erreichung der erforderlichen Eigenschaften erforderlich, so dass bei weiteren Ausführungsformen die eingesetzten Metallpartikel vorzugsweise zu mindestens 90 Gew.-%, mehr bevorzugt zu mindestens 95 Gew.-%, noch mehr bevorzugt zu mindestens 99 Gew.-%, unbeschichtete Metallpartikel sind, jeweils bezogen auf das Gesamtgewicht der Metallpartikel. Insbesondere ist es bevorzugt, dass alle eingesetzten Metallpartikel unbeschichtet sind.

Der Begriff "unbeschichtet" im Sinne der vorliegenden Erfindung bedeutet, dass die entsprechenden Partikel keine zumindest im Wesentlichen umhüllende Beschichtung, vorzugsweise umhüllende Beschichtung, um den Partikel aufweisen. Insbesondere ist es auf dem Gebiet der Metallpigmente oft bevorzugt stark kreuzvernetzte zumindest im Wesentlichen umhüllende Beschichtungen aufzubringen, um einen hohen Schutz gegenüber äußeren Einflüssen oder eine verbesserte Kompatibilität mit dem umgebenden Medium bereitzustellen. Beispiele derartiger Beschichtungen sind Metalloxidbeschichtungen und Polymerbeschichtungen. Natürlich können unbeschichtete Partikel noch Substanzen wie Vermahlungshilfsmittel wie Stearinsäure oder Ölsäure auf deren Oberfläche umfassen.

Ferner hat sich gezeigt, dass es insbesondere für funktionelle Anwendungen wie dem Porenbeton von Vorteil ist, wenn die mittels des Verfahrens hergestellten Metallpartikel zumindest ein bestimmtes Aspektverhältnis aufweisen. Bei weiteren Ausführungsformen ist es bevorzugt, dass die plastisch verformten Metallpartikel ein Aspektverhältnis von mindestens 10, mehr bevorzugt von mindestens 20, noch mehr bevorzugt von mindestens 50, aufweisen.

Ferner können mittels der Zugabe von Additiven die Eigenschaften weiter vorteilhaft verändert werden. Bei weiteren Ausführungsformen wird ein Gemisch aus Metallpartikeln und mindestens einem Polyalkylenglykol vermahlen, wobei das Gesamtgewicht der Metallpartikel und des mindestens einen Polyalkylenglykols höchstens 99,8 Gew.-%, mehr bevorzugt höchstens 99 Gew.-%, noch mehr bevorzugt mindestens 94 Gew.-%, beträgt, jeweils bezogen auf das Gesamtgewicht des Gemisches.

Insbesondere für die erfindungsgemäßen Verwendungen im Porenbeton hat es sich als Vorteil erwiesen in einem weiteren Schritt Verzögerungsmittel aufzubringen, um das Aufschäumverhalten der Metallpartikel zu kontrollieren. Erfindungsgemäß umfasst das erfindungsgemäße Verfahren daher einen nachfolgenden Schritt der Auftragung eines Verzögerungsmittels auf die plastisch verformten Metallpartikel. Beispiele derartiger Verzögerungsmittel sind Phosphorsäureverbindungen wie Phosphorsäuren, Phosphorsäureester und Phosphate.

Erfindungsgemäß werden Aluminiumpartikel und Aluminiumlegierungspartikel verwendet. Beispiele vorteilhafter Legierungsbestandteile sind Silizium und Bor.

Ferner kann es jedoch bevorzugt sein nicht zu hochmolekulare Polyalkylenglykole zu verwenden. Trotz der sehr geringen Menge an Polyalkylenglykol scheinen orientierende Versuche auf eine Beeinflussung des umgebenden Systems insbesondere hinsichtlich der Viskosität hinzudeuten. Dies könnte zwar für Anwendungsgebiete wie den Porenbeton Vorteile bieten, würde jedoch möglicherweise eine Anpassung spezifischer Rezepturen erfordern. Bei weiteren Ausführungsformen ist es bevorzugt, dass die mittlere Molmasse des mindestens einen Polyalkylenglykols höchstens 53000, mehr bevorzugt höchstens 17000, mehr bevorzugt höchstens 13000, mehr bevorzugt höchstens 9000, mehr bevorzugt höchstens 8000, noch mehr bevorzugt höchstens 4750, beträgt. Diese Polyalkylenglykole ermöglichen beispielsweise die Bereitstellung eines Baukastensystems, welches eine optimale Einsetzbarkeit und Austauschbarkeit in einer großen Zahl an Formulierungen bietet. Insbesondere ist es bei weiteren Ausführungsformen bevorzugt, dass die mittlere Molmasse des mindestens einen Polyalkylenglykols im Bereich von 1000 bis 17000, mehr bevorzugt im Bereich von 1300 bis 13000, noch mehr bevorzugt im Bereich von 1400 bis 9000, noch mehr bevorzugt im Bereich von 2900 bis 4750, liegt.

Bei weiteren Ausführungsformen der vorliegenden Erfindung ist es ferner bevorzugt, dass ein Gemisch aus Metallpartikeln und mindestens einem Polyalkylenglykol vermahlen wird, wobei das Gesamtgewicht der Metallpartikel und des mindestens einen Polyalkylenglykols mindestens 60 Gew.-%, mehr bevorzugt mindestens 68 Gew.-%, noch mehr bevorzugt mindestens 74 Gew.-%, beträgt, jeweils bezogen auf das Gesamtgewicht des Gemisches. Bei weiteren Ausführungsformen besteht das Gemisch aus Metallpartikeln und dem mindestens einen Polyalkylenglykol.

Bei weiteren Ausführungsformen ist es bevorzugt, dass das mindestens eine Polyalkylenglykol eine Struktur gemäß Formel (I) aufweist

$$R^1\text{-(O-Alk)}_n\text{-O-R}^1 \qquad (I)$$

, wobei die $R^1$ unabhängig voneinander ausgewählt werden aus der Gruppe bestehend aus H, C1-C4 aliphatischen Gruppen und (Meth)acrylatgruppen,

die Alk unabhängig voneinander ausgewählt werden aus Ethyleneinheiten und Propyleneinheiten, und das Massenmittel von n mindestens 30 ist. Unter dem Begriff "Ethyleneinheiten" werden erfindungsgemäß -$CH_2$-$CH_2$- Einheiten verstanden. Unter dem Begriff "Propyleneinheiten" werden erfindungsgemäß -$CH_2$-C(H)($CH_3$)- beziehungsweise -C(H)($CH_3$)-$CH_2$- Einheiten verstanden. Unter dem Massenmittel von n wird die für ein Polyalkylenglykol gemittelte Kettenlänge verstanden, welche sich aus der mittleren Molmasse errechnen lässt. Sofern verschiedene Polyalkylenglykole vorhanden sind, werden diese zuvor mittels Verfahren wie der GPC aufgetrennt.

Ferner ist es bevorzugt, dass die aliphatischen Gruppen ausgewählt werden aus der Gruppe der Alkylgruppen und Alkenylgruppen, mehr bevorzugt aus der Gruppe der Alkylgruppen und Allylgruppen, noch mehr bevorzugt aus der Gruppe der Alkylgruppen. Insbesondere ist es bevorzugt, dass die $R^1$ unsubstituiert sind und neben H beispielsweise aus unsubstituierten aliphatischen Gruppen und unsubstituierten (Meth)acrylatgruppen ausgewählt werden. Unter dem Begriff "(Meth)acrylatgruppen" werden Methacrylatgruppen und Acrylatgruppen verstanden.

Die (Meth)acrylatfunktionalität scheint Vorteile bei der Einarbeitung in bestimmte polymerhaltige Systeme zu bieten. Für viele andere Anwendungen ist es jedoch vorteilhaft, dass keine derartige reaktive Gruppe vorhanden ist. Bei weiteren Ausführungsformen ist es daher bevorzugt, dass die $R^1$ unabhängig voneinander ausgewählt werden aus der Gruppe bestehend aus H und unsubstituierten C1-C4 aliphatischen Gruppen, mehr bevorzugt aus der Gruppe bestehend aus H und unsubstituierten C1-C4 Alkylgruppen.

Ohne dass es als Einschränkung der Erfindung verstanden werden darf wird ferner vermutet, dass vorteilhafterweise eine freie Bindungsstelle zur Anbindung an die Metallpartikel gegeben sein sollte. Bei Bestimmten der vorgenannten Ausführungsformen ist es daher bevorzugt, dass mindestens ein $R^1$ des mindestens einen Polyalkylenglykols H ist. Vorzugsweise sind beide $R^1$ H.

Bei weiteren Ausführungsformen ist es bevorzugt, dass das Massenmittel von n mindestens 60, mehr bevorzugt mindestens 70, noch mehr bevorzugt mindestens 75, ist.

Gemäß weiteren Ausführungsformen ist es bevorzugt, dass das Massenmittel von n höchstens 200, mehr bevorzugt höchstens 160, noch mehr bevorzugt höchstens 140, ist.

Insbesondere ist es bei bestimmten der vorgenannten Ausführungsformen bevorzugt, dass das Massenmittel von n im Bereich von 60 bis 200, mehr bevorzugt im Bereich von 70 bis 160, noch mehr bevorzugt im Bereich von 75 bis 140 liegt.

Überraschenderweise hat sich gezeigt, dass es vorteilhaft ist Polyalkylenglykole mit spezifischem Schmelzpunkt einzusetzen. Gemäß weiteren Ausführungsformen weist das mindestens eine Polyalkylenglykol einen Schmelzpunkt oder eine Untergrenze des Schmelzpunktbereiches von mindestens 35 °C, mehr bevorzugt mindestens 42 °C, noch mehr bevorzugt mindestens 51 °C, auf. Der Druck hat nur minimalen Einfluss auf den Schmelzpunkt, jedoch wird die Messung vorzugsweise bei 1,013 bar durchgeführt.

Ferner ist es bei weiteren Ausführungsformen bevorzugt, dass das mindestens eine Polyalkylenglykol einen Schmelzpunkt oder Obergrenze des Schmelzpunktbereiches von höchstens 75°C, mehr bevorzugt höchstens 70°C, noch mehr bevorzugt höchstens 68°C, aufweist.

Insbesondere ist es bei weiteren Ausführungsformen bevorzugt, dass das mindestens eine Polyalkylenglykol einen Schmelzpunkt oder Schmelzpunktbereich in einem Bereich von 35°C bis 75°C, mehr bevorzugt in einem Bereich von 42°C bis 70°C, noch mehr bevorzugt in einem Bereich von 51°C bis 68°C, aufweist.

Ferner hat es sich bei Anwendungen wie dem Porenbeton zumindest in bestimmten Zusammensetzungen als vorteilhaft erwiesen, wenn die Wasserlöslichkeit des mindestens einen Polyalkylenglykols mindestens 300 g/l, mehr bevorzugt mindestens 370 g/l, noch mehr bevorzugt mindestens 420 g/l, beträgt.

Weiterhin hat es bei weiteren Ausführungsformen der vorliegenden Erfindung als vorteilhaft erwiesen, wenn das mindestens eine Polyalkylenglykol einen definierten HLB-Wert aufweist. Vorzugsweise liegt bei diesen Ausführungsformen der HLB-Wert des mindestens einen Polyalkylenglykols im Bereich von 16 bis 24, mehr bevorzugt im Bereich von 16,3 bis 22,1, noch mehr bevorzugt im Bereich von 16,5 bis 19,8.

Zwar können theoretisch auch nicht erfindungsgemäß eingesetzte Polyalkylenglykole zugesetzt werden deren mittlere Molmasse mindestens 1000 beträgt und wobei mindestens 50 mol-% der Alkylenglykoleinheiten Propylenglykoleinheiten sind. Vorzugsweise beträgt der Anteil derartiger Polyalkylenglykole jedoch höchstens 10 Gew.-%, mehr bevorzugt höchstens 5 Gew.-%, noch mehr bevorzugt höchstens 1 Gew.-%, bezogen auf die Masse der Metallpartikel.

Insbesondere durch die nachträgliche Zugabe von Polyalkylenglykolen mit höherem Anteil an Propylenglykoleinheiten scheint ein breiteres Anwendungsspektrum erschließbar zu sein. Ohne dass es als Einschränkung der Erfindung verstanden werden darf wird vermutet, dass die verschiedenen Polyalkylenglykole mit höherem und niederen Anteil an Ethylenglykoleinheiten untereinander eine Verträglichkeit vermitteln und die Polyalkylenglykole mit niedrigem Anteil an Ethylenglykoleinheiten wiederum eine Verträglichkeit zu unpolaren Medien vermitteln. Für viele Anwendungen wie den Porenbeton ist eine derartige Änderung der Verträglichkeit jedoch nicht erforderlich oder unerwünscht. Bei weiteren Ausführungsformen ist es daher bevorzugt, dass das Verhältnis von Polyalkylenglykolen mit einer mittleren Molmasse von mindestens 1000 und mehr als 50 mol-% Propylenglykoleinheiten als Alkylenglykoleinheiten zu Polyalkylenglykolen mit einer mittleren Molmasse von mindestens 1000 und mindestens 50 mol-% Ethylenglykoleinheiten als Alkylenglykoleinheiten höchstens 1:1, mehr bevorzugt höchstens 0,5:1, noch mehr bevorzugt höchstens 0,1:1, noch mehr bevorzugt höchstens 0,01:1, beträgt.

Ferner hat es sich für viele Anwendungsgebiete als vorteilhaft erwiesen, wenn die Alkylenglykoleinheiten des mindestens einen Polyalkylenglykols zu mindestens 60 mol-%, mehr bevorzugt zu mindestens 75 mol-%, noch mehr bevorzugt zu mindestens 92 mol-%, Ethylenglykoleinheiten, sind, bezogen auf die Gesamtmolmenge der Alkylenglykoleinheiten. Insbesondere für Anwendungsgebiete wie den Porenbeton scheinen hiermit besonders gute Ergebnisse erzielt zu werden. Vorzugsweise handelt es sich hierbei um reine Polyethylenglykole.

Die Begriff "Polyalkylenglykol"/ "Polyethylenglykol"/ "Polypropylenglykol" bezeichnet Polymere entsprechender Monomere, wobei die Endgruppen gegebenenfalls substituiert sein können. Der Begriff "Polyalkylenglykol" umfasst die Polyethylenglykole und Polypropylenglykole, sowie Copolymerisate von Ethylenglykol und Propylenglykol. Eine wichtige Gruppe der Copolymerisate von Ethylenglykol und Propylenglykol sind die Blockpolymere wie insbesondere Diblockpolymere und Triblockpolymere.

Für bestimmte Einsatzgebiete hat es sich jedoch als vorteilhaft erwiesen das mittels der Vermahlung erhaltene Pulver anzupasten, um beispielsweise die Staubbildung bei der weiteren Verarbeitung zu unterbinden oder eine Zuführung der Metallpartikel in einen kontinuierlichen Prozess mittels simpler Pumptechnik zu ermöglichen. Bei weiteren Ausführungsformen ist es bevorzugt, dass die erfindungsgemäß hergestellten Metallpartikel in Form einer Paste vorliegen. Hierbei hat es sich typischerweise als vorteilhaft erwiesen Alkylenglykole oder Polymere hiervon mit einer mittleren Molmasse bis zu 550 einzusetzen. Diese unter Standardbedingungen flüssigen Verbindungen erwiesen sich als besonders vorteilhaft. Ein Beispiel hierfür ist Diethylenglykol.

Für spezifische Anwendungen, beispielsweise wenn ein besonders gleichmäßiges Aufschäumen des Porenbetons gewünscht ist , ist es bei weiteren Ausführungsformen bevorzugt, dass die plastisch verformten Metallpartikel plättchenförmig sind.

Unter dem Begriff "plättchenförmig" wird im Sinne der vorliegenden Erfindung verstanden, dass entsprechende Partikel ein Aspektverhältnis von mindestens 10 aufweisen. Partikel mit einem Aspektverhältnis von weniger als 10 werden im Sinne der vorliegenden Erfindung als "nichtplättchenförmig" bezeichnet.

Bei weiteren Ausführungsformen wird das Metall der Metallpartikel zu mindestens 90 Gew.-% ausgewählt aus Aluminium und Aluminiumlegierung. Beispiele vorteilhafter Legierungsbestandteile sind Silizium und Bor. Vorzugsweise wird das Metall der Metallpartikel zu mindestens 95 Gew.-%, mehr bevorzugt zu mindestens 99 Gew.-%, noch mehr bevorzugt vollständig, aus Aluminium ausgewählt.

Bei weiteren Ausführungsformen umfasst das Metall der Metallpartikel höchstens 5 Gew.-%, mehr bevorzugt höchstens 2 Gew.-%, mehr bevorzugt höchstens 1 Gew.-%, Metalle die ausgewählt werden aus der Gruppe bestehend aus Silber, Palladium, Platin, Gold, Mischungen davon und Legierungen davon.

Bei weiteren Ausführungsformen werden die Metallpartikel vorzugsweise ausgewählt aus unbeschichteten Metallpartikeln und beschichteten Metallpartikeln, wobei die Menge der Beschichtung der beschichteten Metallpartikel höchstens 15 Gew.-%, vorzugsweise höchstens 12 Gew.-%, mehr bevorzugt höchstens 10 Gew.-% beträgt, bezogen auf das Gesamtgewicht der beschichteten Metallpartikel.

Ferner hat sich gezeigt, dass die erfindungsgemäßen Metallpartikel bei weiteren Ausführungsformen vorzugsweise eine bestimmte Mindestmenge des mindestens einen Polyalkylenglykols aufweisen. Hierbei ist es bevorzugt, dass die Menge des mindestens einen Polyalkylenglykols mindestens 1 Gew.-%, mehr bevorzugt mindestens 1,2 Gew.-%, noch mehr bevorzugt mindestens 1,5 Gew.-%, beträgt, jeweils bezogen auf das Gewicht der Metallpartikel, wobei auch gegebenenfalls infolge der Vermahlung vorhandene Zersetzungsprodukte des mindestens einen Polyalkylenglykols umfasst sind.

Ferner wurden über einer bestimmten Menge typischerweise keinen ausreichend verbesserten Eigenschaften beobachtet, die die Zusatzkosten und die Verringerung des aktiven Metalls rechtfertigten. Bei weiteren Ausführungsformen beträgt die Menge des mindestens einen Polyalkylenglykols daher vorzugsweise höchstens 5,7 Gew.-%, mehr bevorzugt höchstens 4,6 Gew.-%, noch mehr bevorzugt höchstens 3,3 Gew.-%, jeweils bezogen auf das Gewicht der Metallpartikel, wobei auch gegebenenfalls infolge der Vermahlung vorhandene Zersetzungsprodukte des mindestens einen Polyalkylenglykols umfasst sind.

Bei weiteren Ausführungsformen liegt die Menge des mindestens einen Polyalkylenglykols im Bereich von 1 Gew.-% bis 5,7 Gew.-%, mehr bevorzugt im Bereich von 1,2 Gew.-% bis 4,6 Gew.-%, noch mehr bevorzugt im Bereich von 1,5 Gew.-% bis 3,3 Gew.-%, jeweils bezogen auf das Gewicht der Metallpartikel, wobei auch gegebenenfalls infolge der Vermahlung vorhandene Zersetzungsprodukte des mindestens einen Polyalkylenglykols umfasst sind.

Bei weiteren erfindungsgemäßen Ausführungsformen bestehen die erfindungsgemäßen Metallpartikel im Wesentlichen aus elementaren Metall, mindestens einem Polyalkylenglykol und gegebenenfalls infolge der Vermahlung vorhandene Zersetzungsprodukte des mindestens einen Polyalkylenglykols . Vorzugsweise bestehen die erfindungsgemäßen Metallpartikel zu mindestens 90 Gew.-%, mehr bevorzugt zu mindestens 95 Gew.-%, noch mehr bevorzugt zu mindestens 98 Gew.-%, aus elementaren Metall, mindestens einem Polyalkylenglykol und gegebenenfalls infolge der Vermahlung vorhandene Zersetzungsprodukte des mindestens einen Polyalkylenglykols, wobei das mindestens eine Polyalkylenglykole ausgewählt wird aus Polyalkylenglykolen bei denen mindestens 50 mol-% der Alkylenglykoleinheiten Ethylenglykoleinheiten sind, die mittlere Molmasse der Polyalkylenglykole mindestens 1000, vorzugsweise mindestens 1300, mehr bevorzugt mindestens 1400, noch mehr bevorzugt mindestens 2900, beträgt und das mindestens eine Polyalkylenglykol unter Standardbedingungen fest ist.

Erfindungsgemäß werden Aluminiumpartikel oder Aluminiumslegierungspartikel verwendet. Beispiele vorteilhafter Legierungsbestandteile sind Silizium und Bor.

Bei weiteren Ausführungsformen weisen die Metallpartikel vorzugsweise ein Aspektverhältnis von mindestens 10, mehr bevorzugt mindestens 20, noch mehr bevorzugt mindestens 50, auf.

Ferner betrifft die vorliegende Erfindung Metallpartikel, die mittels des erfindungsgemäßen Verfahrens, insbesondere wie es in einem der Ansprüche 1 bis 8 beschrieben ist, hergestellt wurden.

Ferner betrifft die vorliegende Erfindung eine Metallpartikelzusammensetzung umfassend die erfindungsgemäßen Metallpartikel.

Überraschenderweise hat sich gezeigt, dass bereits sehr geringe Menge an Polyalkylenglykol ausreichend sind um beispielsweise eine hervorragende Dispergierbarkeit in Porenbetonmassen zur erreichen. Bei weiteren Ausführungsformen ist es bevorzugt, dass die Menge des mindestens einen Polyalkylenglykols mindestens 0,6 Gew.-%, mehr bevorzugt mindestens 0,8 Gew.-%, noch mehr bevorzugt mindestens 1,0 Gew.-%, beträgt, jeweils bezogen auf das Gewicht der Metallpartikel. Sofern eine zumindest partielle Zersetzung des Polyalkylenglykols aufgetreten ist, so bezieht sich die vorgenannte Angabe auf das Gewicht umfassend die Zersetzungsprodukte.

Ferner zeigte sich, dass mit großen Mengen an Polyalkylenglykol keine essentielle Verbesserung der Eigenschaften erzielt werden konnte. Zudem führte dies neben einer Erhöhung der Kosten zu einer Verringerung des aktiven Metallgehalts. Bei weiteren Ausführungsformen ist es daher bevorzugt, dass die Menge des mindestens einen Polyalkylenglykols höchstens 5,2 Gew.-%, mehr bevorzugt höchstens 4,1 Gew.-%, noch mehr bevorzugt höchstens 3,0 Gew.-%, beträgt, jeweils bezogen auf das Gewicht der Metallpartikel. Derartige Zusammensetzungen sind beispielsweise für Lackformulierungen und die Herstellung von Porenbeton von Vorteil.

Ferner kann es hingegen bevorzugt weiteres Polyalkylenglykol aufzubringen, beispielsweise mittels Aufpolieren. Diese zusätzlichen Alkylenglykole können beispielsweise als Bindemittel dienen, um aus den erfindungsgemäßen Metallpartikeln Granulate oder Formkörper herzustellen. Bei weiteren Ausführungsformen beträgt die Menge des mindestens einen Polyalkylenglykols höchstens 12 Gew.-%, mehr bevorzugt höchstens 7,0 Gew.-%, noch mehr bevorzugt höchstens 5,7 Gew.-%, jeweils bezogen auf das Gewicht der Metallpartikel. Derartige Metallpartikel bieten für Einsatzgebiete wie den Porenbeton zwar den Vorteil der einfacheren Handhabung, jedoch sind die Zusatzkosten des zusätzlichen Polyalkylenglykols typischerweise unerwünscht.

Insbesondere ist es bei weiteren Ausführungsformen bevorzugt, dass die Menge des mindestens einen Polyalkylenglykols im Bereich von 0,8 Gew.-% bis 5,2 Gew.-%, mehr bevorzugt im Bereich von 1,0 Gew.-% bis 4,1 Gew.-%, noch mehr bevorzugt im Bereich von 1,2 Gew.-% bis 3,0 Gew.-%, liegt, jeweils bezogen auf das Gewicht der Metallpartikel.

Ohne dass es als Einschränkung der Erfindung verstanden werden darf deuten die erhaltenen Ergebnisse darauf hin, dass möglichst gleichmäßige und dünne Beschichtungen des Polyalkylenglykols bevorzugt sind. Bei weiteren Ausführungsformen ist es bevorzugt, dass die mittlere Schichtdicke des mindestens einen Polyalkylenglykols auf der Oberfläche höchstens 15 nm, mehr bevorzugt höchstens 12 nm, noch mehr bevorzugt höchstens 10 nm, beträgt.

Ferner konnten mittels der erfindungsgemäßen Metallpartikel hochkonzentrierte Metallpartikelzusammensetzungen erhalten werden. Bei weiteren Ausführungsformen ist es bevorzugt, dass das Gesamtgewicht der Metallpartikel und des mindestens einen Polyalkylenglykols mindestens 90 Gew.-%, mehr bevorzugt mindestens 93 Gew.-%, noch mehr bevorzugt mindestens 97 Gew.-%, beträgt, jeweils bezogen auf das Gesamtgewicht der Metallpartikelzusammensetzung ohne Lösungsmittel. Bei weiteren Ausführungsformen besteht die Metallpartikelzusammensetzung aus Metallpartikeln und dem mindestens einen Polyalkylenglykol sowie gegebenenfalls Lösungsmitteln. Die Lösungsmittel dienen hierbei dem Anpasten der Metallpartikel um insbesondere die Verarbeitung zu erleichtern. Vorzugsweise beträgt die Lösungsmittelmenge höchstens 15 Gew.-%, mehr bevorzugt höchstens 10 Gew.-%, noch mehr bevorzugt höchstens 7 Gew.-%, bezogen auf das Gesamtgewicht der Metallpartikelzusammensetzung.

Ferner kann es für weitere Anwendungen von Vorteil sein im Wesentlichen lösungsmittelfreie Metallpartikelzusammensetzungen einzusetzen. Beispielsweise zeigten sich bestimmte Vorteile bei Anwendungsgebieten wie der Einarbeitung in Kunststoffe. Bei weiteren Ausführungsformen ist es daher bevorzugt, wenn der Lösungsmittelgehalt der Metallpartikelzusammensetzungen höchstens 7 Gew.-%, mehr bevorzugt höchstens 5 Gew.-%, noch mehr bevorzugt höchstens 2 Gew.-%, beträgt, bezogen auf das Gesamtgewicht der Metallpartikelzusammensetzung.

Bevorzugte Formen der erfindungsgemäßen Metallpartikelzusammensetzungen sind Pulver und Pasten.

Pulver sind vorzugsweise im Wesentlichen lösemittelfreie Metallpartikelzusammensetzungen. Beispielsweise weisen derartige Pulver weniger als 5 Gew.-%, mehr bevorzugt weniger als 2 Gew.-%, noch mehr bevorzugt weniger als 1 Gew.-%, Lösungsmittel auf, bezogen auf das Gesamtgewicht der Metallpartikelzusammensetzung.

Pasten werden typischerweise durch das Anpasten von Pulvern mit Lösungsmitteln erhalten. Ein Vorteil hierbei ist die Verringerung oder gar Vermeidung einer Staubbildung bei der Handhabung, wobei der Metallpartikelgehalt nicht zu stark herabgesetzt werden soll. Vorzugsweise beträgt der Lösungsmittelgehalt der Pasten höchstens 40 Gew.-%, mehr bevorzugt höchstens 35 Gew.-%, noch mehr bevorzugt höchstens 32 Gew.-%. Besonders effektive Pasten wurden bei einem Lösungsmittelgehalt von mindestens 15 Gew.-%, mehr bevorzugt mindestens 18 Gew.-%, noch mehr bevorzugt mindestens 22 Gew.-%, erhalten.

Besonders vorteilhaft ist der Einsatz der erfindungsgemäßen Metallpartikel in wasserbasierenden Systemen.

Jedoch vereinfacht die erhöhte Wasserbenetzbarkeit auch beispielsweise die Aufbringung von Schutzschichten in Beschichtungssystem mit hydrophilen Lösungsmitteln wie in gebräuchlichen Sol-Gel-Systemen. Hierin erzeugte Schutzschichten stabilisieren nicht nur die Metallpartikel, sondern können beispielsweise die Affinität für Beschichtungsmittel basierend auf organischen Lösungsmitteln erhöhen.

Eine besonders vorteilhafte Anwendung der erfindungsgemäßen Metallpartikel ist die Verwendung der erfindungsgemäßen Aluminiumpartikel, zur Wasserstoffentwicklung. Dies wird erfindungsgemäß bei der Herstellung von Porenbeton genutzt werden.

Beispiel 1:

Ein Aluminiumgrieß mit einem $d_{50}$ von 30 $\mu$m wird mittels der Trockenvermahlung unter Einsatz von Eisenkugeln und 2 Gew.-% des Vermahlungshilfsmittel gemäß nachstehender Tabelle, bezogen auf das Gewicht der Metallpartikel, vermahlen.

| Beispiel | Vermahlungshilfsmittel |
|---|---|
| Vergleichsbeispiel 1-1 | Ölsäure |
| Vergleichsbeispiel 1-2 | Stearinsäure |
| Beispiel 1-3 | Polyethylenglykol mittlere Molmasse 1500 |
| Beispiel 1-4 | Polyethylenglykol mittlere Molmasse 3000 |
| Beispiel 1-5 | Polyethylenglykol mittlere Molmasse 4000 |
| Beispiel 1-5 | Polyethylenglykol mittlere Molmasse 6000 |
| Beispiel 1-6 | Polyethylenglykol mittlere Molmasse 8000 |
| Beispiel 1-7 | Polyethylenglykol mittlere Molmasse 35000 |
| Beispiel 1-8 | Polyglykol M 4000 (Polyethylenglykolmonomethylether mittlere Molmasse im Bereich von 3500-4770) |
| Beispiel 1-9 | Polyethylenglykolallylmethylether mittlere Molmasse 5000 |
| Beispiel 1-10 | Polyglykol MA 5000/50 (Polyethylenglykolmonomethacrylat mittlere Molmasse 5000) |

Beispiel 2:

Vermahlung analog den unter Beispiel 1 aufgeführten Vermahlungen unter Einsatz von Polyethylenglykol mit einer mittleren Molmasse von 3000.

| Beispiel | Menge Polyethylenglykol mittlere Molmasse 3000 |
|---|---|
| Beispiel 2-1 | 0,95 Gew.-% |
| Beispiel 2-2 | 1,1 Gew.-% |
| Beispiel 2-3 | 2,3 Gew.-% |
| Beispiel 2-4 | 4,4 Gew.-% |
| Beispiel 2-5 | 5,6 Gew.-% |

Die Vermahlung funktionierte gut in den vorgenannten Fällen. Bei Beispiel 2-5 wiesen einzelne Beobachtungen jedoch auf ein beginnendes Agglomerieren der erhaltenen Partikel hin. Für einige bei der Trockenvermahlung eingesetzte kontinuierliche Verfahren könnte dies gegebenenfalls Probleme bereiten.

Anwendungsbeispiel 1: Wasserstoffentwicklung

Zu 2 l Wasser (40 °C) werden 2 kg Quarzmehl Dorsilit 1600, 200 g Zement und 1 kg Weißfeinkalk und 2,5 g Metallpartikel gegeben und für 30 s intensiv vermischt, bevor das Gemisch in die Gießform überführt wird. Hierbei wird die Höhe des Gemisches in Bezug auf die Zeit detektiert.

| Beispiel | Beobachtung |
|---|---|
| Vergleichsbeispiel 1-1 | Metallpartikel schwimmen auf, kein reelles Volumenwachstum |
| Vergelichsbeispiel 1-2 | Metallpartikel schwimmen auf, kein reelles Volumenwachstum |
| Beispiele 1-3 bis 1-10 | Sehr ähnliches Verhalten bei diesen Beispielen, Metallpartikel verteilen sich scheinbar gleichmäßig, gleichmäßiges Wachstum, Setzmaß sehr gering bis nahezu nicht vorhanden |

Es zeigte sich, dass die erfindungsgemäßen Metallpartikel direkt zur Erzeugung von Porenbeton eingesetzt werden können. Hierbei bieten sie neben einen gleichmäßigen Wachstum des Testbetons ein sehr niedriges Setzmaß. Unter Setzmaß wird der Höhenunterschied zwischen maximaler Treibhöhe und Endhöhe verstanden.

Anwendungsbeispiel 2: Dispergierbarkeit in Wasser

Die qualitative Bestimmung der Dispergierbarkeit in Wasser wurde mittels des nachfolgenden Verfahrens getestet. Eine Spatelspitze des zu testenden Metallpulver wurde aus einer Höhe von 1 cm über der Wasseroberfläche in ein 100 ml Becherglas mit 80 ml Wasser gegeben. Hiernach wurde die Geschwindigkeit des Absinkens des Pulvers, sowie dessen Verteilbarkeit mittels Umrühren beobachtet.

| Beispiel | Beobachtung bei Zugabe | Beobachtung bei Umrühren |
|---|---|---|
| Vergleichsbeispiel 1-1 | kein Absinken im Wasser, schwimmt auf Oberfläche | kein Dispergieren möglich, schwimmt weiterhin auf Oberfläche |
| Vergleichsbeispiel 1-2 | kein Absinken im Wasser, schwimmt auf Oberfläche | kein Dispergieren möglich, schwimmt weiterhin auf Oberfläche |
| Beispiele 1-3 bis 1-10 | schnelles Absinken des Metallpulvers und bereits beim Absinken partielle Verteilung im Wasser | optisch sehr gute Verteilung im Wasser, an der Wasseroberfläche keine Ausbildung eines Silberspiegels |

## Patentansprüche

1.  Verfahren zur Herstellung plastisch verformter Metallpartikel, wobei Metallpartikel unter Einsatz mindestens eines Polyalkylenglykols vermahlen werden, wobei die Alkylenglykoleinheiten des mindestens einen Polyalkylenglykols ausgewählt werden aus Ethylenglykol und Propylenglykol, wobei mindestens 50 mol-% der Alkylenglykoleinheiten Ethylenglykoleinheiten sind, wobei die mittlere Molmasse des mindestens einen Polyalkylenglykols mindestens 1000 beträgt und das mindestens eine Polyalkylenglykol unter Standardbedingungen (1 bar, 25 °C) fest ist, wobei das Metall der Metallpartikel der Gruppe bestehend aus Aluminium und Aluminiumlegierungen, entnommen werden und wobei nachfolgend ein Verzögerungsmittel auf die plastisch verformten Metallpartikel aufgetragen wird.

2.  Verfahren gemäß Anspruch 1, wobei das mindestens eine Polyalkylenglykol eine Struktur gemäß Formel (I) aufweist

$$R^1\text{-}(O\text{-}Alk)_n\text{-}O\text{-}R^1 \qquad (I)$$

, wobei die $R^1$ unabhängig voneinander ausgewählt werden aus der Gruppe bestehend aus H, C1-C4 aliphatischen Gruppen und (Meth)acrylatgruppen,

die Alk unabhängig voneinander ausgewählt werden aus Ethyleneinheiten und Propyleneinheiten, und
das Massenmittel von n mindestens 30 ist.

3.  Verfahren gemäß einem der Ansprüche 1 bis 2, wobei mindestens ein $R^1$ des mindestens einen Polyalkylenglykols H ist.

4.  Verfahren gemäß einem der Ansprüche 1 bis 3, wobei das Massenmittel von n im Bereich von 60 bis 200 liegt.

5. Verfahren gemäß einem der Ansprüche 1 bis 4, wobei die mittlere Molmasse des mindestens einen Polyalkylenglykols höchstens 53000 beträgt.

6. Verfahren gemäß einem der Ansprüche 1 bis 5, wobei die Wasserlöslichkeit des mindestens einen Polyalkylenglykols mindestens 300 g/l beträgt.

7. Verfahren gemäß einem der Ansprüche 1 bis 6, wobei der HLB-Wert des mindestens einen Polyalkylenglykols im Bereich von 8 bis 24 liegt.

8. Verfahren gemäß einem der Ansprüche 1 bis 7, wobei die Alkylenglykoleinheiten des mindestens einen Polyalkylenglykols zu mindestens 60 mol-% Ethylenglykoleinheiten sind.

9. Metallpartikel, hergestellt gemäß dem Verfahren der Ansprüche 1 bis 8.

10. Metallpartikel gemäß Anspruch 9, wobei die Menge des mindestens einen Polyalkylenglykols im Bereich von 0,6 Gew.-% bis 5,7 Gew.-% liegt, bezogen auf das Gewicht der Metallpartikel.

11. Metallpartikelzusammensetzung umfassend Metallpartikel gemäß einem der Ansprüche 9 bis 10, wobei die Metallpartikelzusammensetzung ein Pulver oder eine Paste ist.

12. Verwendung der Metallpartikelzusammensetzung nach Anspruch 11, wobei die Aluminiumpartikel zur Wasserstoffentwicklung bei der Herstellung von Porenbeton eingesetzt werden

## Claims

1. A method for producing plastically deformed metal particles, wherein metal particles are ground using at least one polyalkylene glycol, wherein the alkylene glycol units of the at least one polyalkylene glycol are selected from ethylene glycol and propylene glycol, wherein at least 50 mol% of the alkylene glycol units are ethylene glycol units, wherein the average molar mass of the at least one polyalkylene glycol is at least 1,000 and the at least one polyalkylene glycol is solid under standard conditions (1 bar, 25°C), wherein the metal of the metal particles is taken from the group consisting of aluminium and aluminium alloys, and wherein a retarding agent is subsequently applied to the plastically deformed metal particles.

2. The method according to claim 1, wherein the at least one polyalkylene glycol has a structure according to formula (I)

$$R^1\text{-}(O\text{-}Alk)_n\text{-}O\text{-}R^1 \qquad (I)$$

, wherein the $R^1$ are selected independently from one another from the group consisting of H, C1-C4 aliphatic groups and (meth)acrylate groups,

the Alk are selected independently from one another from ethylene units and propylene units, and
the average mass of n is at least 30.

3. The method according to one of claims 1 to 2, wherein at least one $R^1$ of the at least one polyalkylene glycol is H.

4. The method according to one of claims 1 to 3, wherein the average mass of n is in the range of 60 to 200.

5. The method according to one of claims 1 to 4, wherein the average molar mass of the at least one polyalkylene glycol is at most 53,000.

6. The method according to one of claims 1 to 5, wherein the water solubility of the at least one polyalkylene glycol is at least 300 g/l.

7. The method according to one of claims 1 to 6, wherein the HLB value of the at least one polyalkylene glycol is in the range of 8 to 24.

8. The method according to one of claims 1 to 7, wherein the alkylene glycol units of the at least one polyalkylene glycol are at least 60 mol% ethylene glycol units.

9. Metal particles prepared according to the method of claims 1 to 8.

10. The metal particles according to claim 9, wherein the amount of the at least one polyalkylene glycol is in the range of 0.6% by weight to 5.7% by weight, relative to the weight of the metal particles.

11. A metal particle composition comprising metal particles according to one of claims 9 to 10, wherein the metal particle composition is a powder or a paste.

12. Use of the metal particle composition according to claim 11, wherein the aluminium particles are used for hydrogen evolution in the production of aerated concrete.

**Revendications**

1. Procédé de production de particules métalliques déformées plastiquement, dans lequel les particules métalliques sont broyées à l'aide d'au moins un polyalkylène glycol, les motifs alkylène glycol de l'au moins un polyalkylène glycol sont choisis parmi l'éthylène glycol et le propylène glycol, au moins 50 % en moles de motifs alkylène glycol sont les motifs éthylène glycol, la masse molaire moyenne de l'au moins un polyalkylène glycol est d'au moins 1 000 et l'au moins un polyalkylène glycol est solide dans les conditions standard (1 bar, 25 °C), le métal des particules métalliques du groupe constitué par l'aluminium et les alliages d'aluminium est prélevé, et un agent retardateur est ensuite appliqué aux particules métalliques déformées plastiquement,

2. Procédé selon la revendication 1, dans lequel l'au moins un polyalkylène glycol présente une structure selon la formule (I)

$$R^1\text{-}(O\text{-}Alk)_n\text{-}O\text{-}R^1 \qquad (I)$$

, les $R^1$ étant choisis indépendamment les uns des autres dans le groupe constitué par H, les groupes aliphatiques en C1-C4 et les groupes (méth)acrylate,

les Alk étant choisis indépendamment parmi les motifs éthylène et
les motifs propylène, et
la moyenne en poids du poids moléculaire de n étant d'au moins 30.

3. Procédé selon l'une quelconque des revendications 1 à 2, dans lequel au moins un $R^1$ de l'au moins un polyalkylène glycol est H.

4. Procédé selon l'une quelconque des revendications 1 à 3, dans lequel la moyenne en poids du poids moléculaire de n est comprise entre 60 et 200.

5. Procédé selon l'une quelconque des revendications 1 à 4, dans lequel la masse molaire moyenne de l'au moins un polyalkylène glycol est d'au plus 53 000.

6. Procédé selon l'une quelconque des revendications 1 à 5, dans lequel la solubilité dans l'eau de l'au moins un polyalkylène glycol est d'au moins 300 g/l.

7. Procédé selon l'une quelconque des revendications 1 à 6, dans lequel la valeur HLB de l'au moins un polyalkylène glycol est comprise entre 8 et 24.

8. Procédé selon l'une quelconque des revendications 1 à 7, dans lequel les motifs alkylène glycol de l'au moins un polyalkylène glycol représentent au moins 60 % en moles de motifs éthylène glycol.

9. Particules métalliques produites selon le procédé selon les revendications 1 à 8.

10. Particules métalliques selon la revendication 9, dans lesquelles la quantité de l'au moins un polyalkylène glycol se situe dans la gamme comprise entre 0,6 % en poids et 5,7 % en poids, rapporté au poids des particules métalliques.

11. Composition de particules métalliques comprenant des particules métalliques selon l'une quelconque des revendications 9 à 10, la composition de particules métalliques étant une poudre ou une pâte.

12. Utilisation de la composition de particules métalliques selon la revendication 11, dans laquelle les particules d'aluminium sont utilisées pour le dégagement d'hydrogène dans la fabrication de béton cellulaire.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 8409345 B1
- JP 2011256094 A
- WO 2013014211 A2
- WO 2009156149 A1
- EP 0086575 A2
- US 6582676 B2